# FASCICULE DE BREVET EUROPEEN

(11) **EP 3 938 910 B1**
(45) Date de publication et mention de la délivrance du brevet: **07.06.2023**
(21) Numéro de dépôt: 20725889.8
(22) Date de dépôt: 12.03.2020
(51) Int. Cl.: G06F 11/16, G06F 11/18, G06F 11/07, G05B 23/02

(54) **LOCALISATION DE PANNE DANS UN SYSTÈME D'ACQUISITION REDONDANT**
FEHLERLOKALISIERUNG INNERHALB EINES REDONDANTEN ERFASSUNGSSYSTEMS
FAULT LOCALISATION WITHIN A REDUNDANT ACQUISITION SYSTEM

(30) Priorité: 12.03.2019 FR 1902477
(43) Date de publication de la demande: 19.01.2022
(73) Titulaire: SAFRAN AIRCRAFT ENGINES, 75015 Paris (FR)
(72) Inventeur: DENEUVE, Sébastien, Jean, Fernand, 77550 MOISSY-CRAMAYEL (FR); YING, Charles, 77550 MOISSY-CRAMAYEL (FR)
(74) Mandataire: Regimbeau
(86) Numéro de dépôt international: PCT/FR2020/050523
(87) Numéro de publication internationale: WO 2020/183113

(56) Documents cités:
- EP-A1- 2 034 409
- WO-A1-2013/038091
- GB-A- 2 260 430

## Description

### DOMAINE TECHNIQUE GENERAL

L'invention concerne la gestion des pannes dans des systèmes d'acquisitions duplex (aussi appelé systèmes d'acquisition redondants).

L'invention sera illustrée dans le cadre général d'une turbomachine d'un aéronef mais est applicable à tout système d'acquisition duplex.

Le système d'acquisition mesure par exemple la position d'une valve, la course d'un vérin, etc.

### ETAT DE L'ART

Le document WO2013/038091 divulgue un procédé et un système de surveillance d'une chaîne de mesure destinée à recueillir au cours du temps des mesures relatives à un turboréacteur d'aéronef, le système comportant des moyens de traitement configurés pour construire un indicateur de santé de ladite chaîne de mesure basé sur un comptage de transitions entre des mots de santé successifs définissant un score de validité des mesures successives correspondantes.

Un moteur équipant un aéronef monomoteur est généralement plus contraint sur la sécurité que dans le cadre d'une application bimoteur. En effet pour une application bi-moteur, une coupure moteur est un évènement avec une criticité moindre que pour une application monomoteur où l'évènement est classé très dangereux puisqu'une perte de la poussée du moteur unique entraine la perte de la propulsion de l'aéronef.

La gestion des pannes pour une telle application nécessite donc d'être adaptée afin d'éviter au maximum les pertes de poussée inacceptables (appelée LOTC :
Lost Of Thrust Control). Les acquisitions pouvant engendrer un LOTC sont généralement physiquement redondées (acquisitions duplex) afin d'éviter qu'une panne simple électrique puisse amener au LOTC (exigence de certification CS-E 50 par exemple).

Le système mécanique ou électrique ou électronique ou toute combinaison intervenant dans l'acquisition duplexe est donc redondant : il comprend au moins deux voies A et B effectuant la même fonction d'acquisition.

La redondance physique permet de détecter les pannes simples et de s'en accommoder. En effet, un test d'écart Δ entre les voies A et B (par exemple le calcul de l'écart entre les valeurs mesurées par chaque voie A, B, telle qu'une intensité ou un voltage, ou leurs signaux numériques correspondants) est généralement effectué sur les acquisitions dans le programme de régulation pour détecter ces pannes simples.

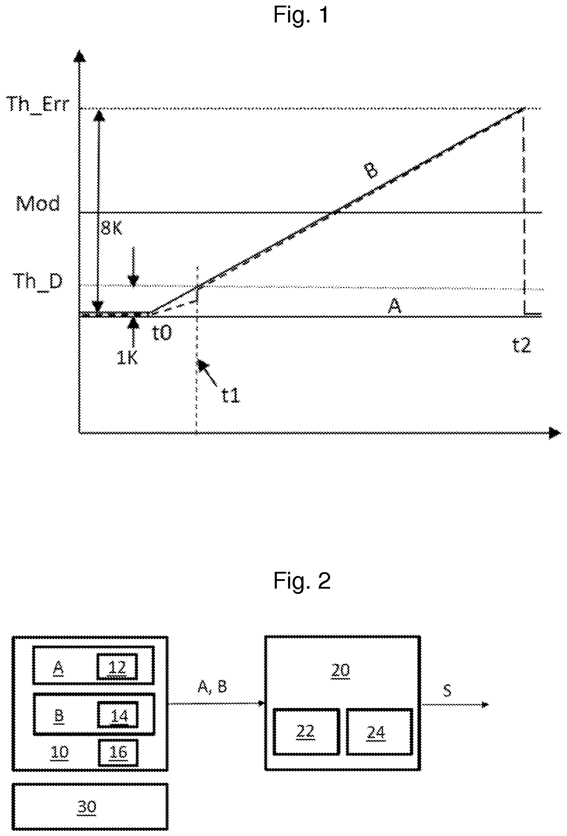

La **figure 1** illustre cette méthode. Elle sera décrite par la suite.

Ce test d'écart Δ calcule l'écart Δ entre voies A, B et le compare à un seuil de détection prédéfini Th_D :
- Si l'écart Δ entre les voies A et B est inférieur au seuil de détection Th_D, on considère qu'il n'y a pas de panne (soit les deux voies A, B sont effectivement saines, soit une voie est légèrement défaillante mais la panne est suffisamment faible pour être sans impact au niveau moteur),
- Si l'écart Δ entre les voies A et B est supérieur au seuil de détection Th_D, on considère qu'il y a une panne sur une des deux voies A, B puisque cet écart Δ est trop important pour traduire un comportement physique réel du moteur. On dit alors qu'une panne est détectée.

Une fois détectée, il est alors nécessaire de localiser la panne, c'est-à-dire déterminer la voie défaillante parmi les deux voies testées.

Généralement la localisation est effectuée simultanément à la détection en faisant un vote à trois avec un modèle d'arbitrage : à l'aide d'un modèle de la grandeur physique mesurée (le modèle fournissant des valeurs modélisées de la grandeur physique qui ont été élaborées à partir des mesures d'autres grandeurs physiques dans l'environnement du moteur), la voie A, B la plus proche de ce modèle, c'est-à-dire la voie A, B dont la valeur acquise est la plus proche de la valeur modélisée de la grandeur physique, est considérée valide.

En d'autres termes, quand une panne est détectée et que la voie A (respectivement B) est proche du modèle, alors on considère que la voie B (respectivement A) est défaillante et on sélectionne la voie A (respectivement B). Par exemple, cette sélection signifie que ce sera la voie A qui sera utilisée pour toutes les autres actions concernant l'aéronef. La voie B est fonctionnellement ignorée.

Le problème de cette stratégie est que la précision du modèle est généralement beaucoup moins bonne que la précision du capteur ce qui peut rapidement conduire à des mauvaises localisations.

L'exemple ci-dessous permettra d'illustrer cette situation.

En pratique, la valeur sélectionnée pour les traitements divers subséquent à l'acquisition (utilisation des mesures acquises dans d'autres calculs, etc.) est généralement la moyenne arithmétique entre voies A, B en fonctionnement nominal (i.e. quand les deux voies A et B sont saines), ce qui permet alors de diviser par deux l'impact d'une panne d'une des deux voies sur la valeur sélectionnée (sur la **figure 1**, le trait en pointillé jusqu'à t=t1). Cependant en cas de mauvaise localisation (c'est-à-dire que si en cas de panne, on sélectionne la voie défaillante), l'erreur est prise en totalité ce qui est le cas le plus défavorable.

En effet, si on considère que Voie_saine=Valeur_réelle et
Voie_défaillante=Valeur_réelle+Défaillance, on observe bien que la sélection de la voie défaillante est plus défavorable que l'absence d'accommodation.
Si on choisit la voie saine, alors on a
Valeur_sélectionnée=Voie_saine=Valeur_réelle
Si on choisit la moyenne entre voies, alors on a
Valeur_sélectionnée=1/2 (Voie_saine+Voie_défaillante)
=1/2 (Valeur_réelle+Valeur_réelle+Défaillance)
= Valeur_réelle+ 1/2 Défaillance
Si on choisit la voie défaillante, alors on a
Valeur_sélectionnée=Voie_défaillante =Valeur_réelle+Défaillance

Ainsi, en cas de mauvaise sélection, on subit la défaillance dans son intégralité, contre seulement la moitié de la défaillance dans le cas d'une prise en compte de la moyenne.

Dans l'exemple de la **figure 1**, on considère un capteur avec une voie B en dérive. On suppose qu'un évènement redouté (LOTC par exemple) arrive si on se trompe de 8K sur la mesure (seuil de défaillance Th_Err).

On définit (paramètre de conception) un seuil de détection de l'écart entre voies (seuil de « cross-check ») Th_D de 1K et on impose que la localisation se fasse en même temps que la détection. De plus, en fonctionnement nominal, on sélectionne la moyenne entre voies A, B.

Au moment t0, une des deux voies dérive (supposons qu'il s'agisse de la voie B). La courbe sélectionnée, qui correspond à la moyenne en régime nominal dérive deux fois plus lentement (sur la **figure 1**, le trait en pointillé jusqu' t=t1). A t1, la voie B atteint le seuil de détection. Comme les capteurs des voies A et B sont précis, cette détection est fiable (i.e. il y a réellement un problème).

La localisation devant se faire aussi à t1, il faut comparer les voies A et B avec le modèle. En revanche, comme la détection s'est faite très tôt (avec un écart Δ faible), la « mauvaise » précision du modèle ne permet pas toujours de discriminer la voie défaillante de la voie saine. Ainsi, si la sélection se porte sur la voie B, la courbe sélectionnée B atteindra le seuil de l'évènement Th_Err plus rapidement que si la courbe sélectionnée était restée celle de la moyenne des voies A, B. On a donc rejeté la bonne voie A et la situation se retrouve immédiatement détériorée.

On observe alors que dans certains cas, une localisation trop hâtive amène à amplifier un phénomène qui aurait été plus faible sans action.

Il serait donc préférable de définir le bon moment pour localiser afin de minimiser la probabilité de mauvaise localisation.

Enfin, une autre approche parfois utilisée est de ne pas détecter de panne tant qu'on n'est pas capable de la localiser. L'inconvénient est dans ce cas de retarder la détection de la panne.

L'invention proposée par la suite définit une stratégie qui permet de diminuer fortement le nombre de fausses localisations et donc conduit à des systèmes de régulation plus sûrs.

### PRESENTATION DE L'INVENTION

L'invention part du constat que le taux de mauvaise localisation est relativement important avec la stratégie de gestion des pannes actuelles. En effet, la détection et la localisation de panne sont effectuées simultanément alors que ces deux phases ne répondent pas au même besoin :
- la détection est une opération essentiellement basée sur la précision des capteurs et le seuil de détection est généralement déterminé par cette précision,
- la localisation est une opération basée sur la précision du modèle d'arbitrage, durant laquelle on cherche à évaluer la voie la plus vraisemblablement vraie en s'appuyant sur la sortie du modèle.

Les phases de détection et de localisation ont donc tout intérêt à être distinguées car elles ne sont pas dirigées par les mêmes paramètres dimensionnants. Lorsqu'une panne est d'amplitude relativement faible, il est plus sûr de ne pas l'accommoder (conservation de la moyenne entre voies) que de chercher à la localiser en prenant un risque important de se tromper.

A cet égard, selon un premier aspect, l'invention propose un procédé de détection et de localisation de panne dans un système d'acquisition comprenant deux voies d'acquisition redondantes de la mesure d'une grandeur physique dans un environnement, le procédé utilisant une unité de calcul comprenant une mémoire stockant un modèle de la grandeur physique mesurée, ledit modèle fournissant des valeurs modélisées de la grandeur physique en fonction de mesures d'autres grandeurs physiques dans ledit environnement, le procédé mettant en oeuvre les étapes suivantes :
- (E1) détection d'une erreur symptomatique d'une voie d'acquisition défectueuse lorsqu'un écart entre les valeurs mesurées des deux voies (A, B) atteint un seuil de détection,
- (E2) attente pour laisser le système d'acquisition évoluer pendant une certaine durée de maintien sous contrôle de l'erreur,
- (E3) localisation de la voie défectueuse parmi les deux voies, lorsque l'écart des valeurs mesurées entre les voies atteint un seuil de localisation ladite localisation étant effectuée à partir de la comparaison de la valeur mesurée de chacune des voies avec une valeur modélisée de la grandeur physique,
   le seuil de localisation étant différent du seuil de détection.

La durée T est préférablement non-nulle. Elle correspond à une durée d'inoffensivité de l'erreur.

Dans un mode de réalisation, l'unité de calcul génère une donnée de travail qui prend en compte les valeurs des deux voies d'acquisition tant que l'étape de localisation (E3) n'est pas déclenchée, ledit procédé comprenant une étape de :
- (E4) sélection de la voie non-défectueuse comme grandeur de travail une fois l'étape de localisation (E3) de la voie défectueuse effectuée.

Dans un mode de réalisation, un seuil de défaillance est prédéfini et l'unité de calcul génère une donnée de travail qui prend en compte les valeurs des deux voies d'acquisition tant que l'étape de localisation (E3) n'est pas déclenchée, et dans lequel le seuil de localisation est choisi de sorte que l'écart entre les valeurs des deux voies puisse dépasser le seuil de défaillance mais que l'écart entre la donnée de travail et la valeur de l'une ou l'autre des deux voies ne puisse pas dépasser le seuil de défaillance.

Dans un mode de réalisation, le seuil de localisation est supérieur à un seuil de défaillance.

Dans un mode de réalisation, la grandeur de travail correspond à une grandeur de sortie de l'unité pour le traitement subséquent par d'autres calculateurs.

Dans un mode de réalisation, la grandeur de travail correspond à une moyenne arithmétique des grandeurs des voies.

Dans un mode de réalisation, le seuil de localisation est compris (préférablement strictement) entre le seuil de défaillance et deux fois le seuil de défaillance.

Dans un mode de réalisation, une étape de notification de la détection est émise par l'unité de calcul avant la mise en oeuvre de l'étape de localisation (E4), préférablement au moment de l'étape de détection (E3), pour fournir une information d'un état de panne détectée mais non localisée.

Dans un mode de réalisation, le seuil de détection et/ou le seuil de localisation et/ou le seuil de défaillance et/ou le modèle de la grandeur physique est/sont fonction des plages de fonctionnement du système d'acquisition et/ou de la précision du modèle.

Dans un mode de réalisation, le seuil de détection est fixé en fonction des spécifications de capteur des deux voies.

Dans un mode de réalisation, les seuils et les écarts sont exprimés en valeur absolue (et sont donc positifs).

Selon un deuxième aspect, l'invention propose une unité de calcul pour la détection et la localisation de panne d'une voie d'acquisition de mesure dans un système d'acquisition comprenant deux voies d'acquisition redondantes de la mesure d'une grandeur physique dans un environnement, l'unité de calcul comprenant une mémoire (24) stockant un modèle (Mod) de la grandeur physique mesurée, ledit modèle fournissant des valeurs modélisées de la grandeur physique en fonction de mesures d'autres grandeurs physiques dans ledit environnement, l'unité de calcul étant configuré pour recevoir des données de mesure issues des voies d'acquisition du système d'acquisition,
l'unité de calcul étant configurée pour mettre en oeuvre les étapes du procédé décrit précédemment, c'est-à-dire notamment les étapes suivantes :
   - (E1) détection d'une erreur lorsque l'écart entre les valeurs mesurées des deux voies franchit un seuil de détection,
   - (E2) attente pour laisser le système d'acquisition évoluer pendant une certaine durée,
   - (E3) localisation de la voie défectueuse parmi les deux voies, lorsque l'écart des valeurs mesurées entre les voies franchit un seuil de localisation, ladite localisation étant effectuée à partir de la comparaison de la valeur mesurée de chacune des voies avec une valeur modélisé de la grandeur physique,
le seuil de localisation étant différent du seuil de détection.

Selon un troisième aspect non revendiqué, l'invention propose un ensemble comprenant une unité de calcul telle que décrite précédemment et un système d'acquisition duplex.

Selon un quatrième aspect non revendiqué, l'invention propose un procédé de localisation de panne dans un système d'acquisition comprenant deux voies d'acquisition redondantes de la mesure d'une grandeur physique dans un environnement, le procédé utilisant une unité de calcul comprenant une mémoire stockant un modèle de la grandeur physique mesurée, ledit modèle fournissant des valeurs modélisées de la grandeur physique en fonction de mesures d'autres grandeurs physiques dans ledit environnement, le procédé mettant en oeuvre les étapes suivantes :
- (E3) localisation de la voie défectueuse parmi les deux voies, lorsqu'un écart des valeurs mesurées entre les voies atteint un seuil de localisation, ladite localisation étant effectuée à partir de la comparaison de la valeur mesurée de chacune des voies avec le modèle de la voie stocké dans la mémoire,
   dans lequel un seuil de défaillance est défini et l'unité de calcul génère une donnée de travail qui prend en compte les valeurs des deux voies d'acquisition tant que l'étape de localisation (E3) n'est pas déclenchée, et dans lequel le seuil de localisation est choisi de sorte que l'écart Δ entre les valeurs des deux voies puisse dépasser le seuil de défaillance mais que l'écart entre la donnée de travail et l'une ou l'autre des deux voies ne puisse pas dépasser le seuil de défaillance (préférablement l'écart le plus grand parmi les deux écarts).

L'étape de localisation implique ici l'étape de détection.

Selon un cinquième aspect non revendiqué, l'invention propose une unité de calcul pour la détection et la localisation de panne dans un système d'acquisition comprenant deux voies d'acquisition redondantes de la mesure d'une grandeur physique dans un environnement, l'unité de calcul comprenant une mémoire stockant un modèle de la grandeur physique mesurée, ledit modèle fournissant des valeurs modélisées de la grandeur physique en fonction de mesures d'autres grandeurs physiques dans ledit environnement, l'unité de calcul étant configuré pour recevoir des données de mesure issues des voies d'acquisition du système d'acquisition,
l'unité de calcul étant configurée pour mettre en oeuvre les étapes du procédé décrit précédemment, c'est-à-dire notamment les étapes suivantes :
   - (E3) localisation de la voie défectueuse parmi les deux voies, lorsqu'un écart des valeurs mesurées entre les voies atteint un seuil de localisation, ladite localisation étant effectuée à partir de la comparaison de la valeur mesurée de chacune des voies avec le modèle de la voie stocké dans la mémoire,
dans lequel un seuil de défaillance est défini et l'unité de calcul génère une donnée de travail qui prend en compte les valeurs deux voies d'acquisition tant que l'étape de localisation (E3) n'est pas déclenchée, et dans lequel le seuil de localisation est choisi de sorte que l'écart Δ entre les valeurs des deux voies puisse dépasser le seuil de défaillance mais que l'écart entre la donnée de travail et l'un ou l'autre des deux voies ne puisse pas dépasser le seuil de défaillance (préférablement l'écart le plus grand parmi les deux écarts).

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
La figure 1 illustre une méthode de détection et de localisation connue.
La figure 2 illustre un ensemble permettant de mettre en oeuvre l'invention.
La figure 3 illustre une méthode conforme à un mode de réalisation de l'invention.

### DESCRIPTION DETAILLEE

En référence à la **figure 2** a été illustré un ensemble comprenant un système d'acquisition duplex ou redondant 10 et une unité de calcul 20 apte à recevoir des données issues du système d'acquisition 10.

Le système d'acquisition 10 comprend une première voie A et une deuxième voie B permettant de mesurer des données relatives à un dispositif 30 mécanique, électronique, électrique et/ou hydraulique. Les voies A, B sont destinées à mesurer la même grandeur physique du même dispositif 30. Les voies A et B comprennent pour cela chacune au moins respectivement un capteur 12, 14 (capteur de tension, de champ magnétique, de température, de couple, de force, etc.).

Les capteurs 12, 14 des deux voies A, B envoient ensuite leurs données à l'unité de calcul 20. Les données sont généralement sous forme de valeur de tension électrique indicative du paramètre que les capteurs 12, 14 mesurent. Les données peuvent être transmises de façon numérique ou analogique. En particulier, les données peuvent être prétraitées (filtrage, lissage, etc., soit au niveau du capteur, soit au niveau de l'unité de calcul 20) pour pouvoir être utilisée dans le cas d'un procédé conforme aux différents modes de réalisation de l'invention.

Le système d'acquisition 10 peut ainsi comprendre un module de traitement 16 pour effectuer le pré-traitement des données issues des voies A, B afin que l'unité de calcul 20 reçoive des données utilisables directement.

L'unité de calcul 20 comprend un processeur 22 apte à traiter des données (par exemple calculer les différences entre les valeurs des voies d'acquisition A, B, calculer une nouvelle grandeur à partir de ces voies d'acquisition A, B, calculer une moyenne, etc.) et à effectuer des calculs, et comprend en outre une mémoire 24. Le processeur 22 peut communiquer avec la mémoire 24.

L'unité de calcul 20 a aussi pour fonction de générer une donnée de travail S, qui est ensuite utilisée par les autres calculateurs de l'aéronef. La donnée de travail S correspond à une fonction des valeurs des voies d'acquisition A, B, que l'on peut écrire sous la forme S=f(A,B). Le principe de redondance appelle un principe de symétrie dans la fonction f (car les deux voies A, B sont généralement préférablement indifférenciées et aucune n'est privilégiée par rapport l'autre) donc on choisit préférablement une fonction f telle que f(A,B)=f(B,A). Il peut arriver que ce ne soit pas le cas : parfois, pour certaines températures, on préfère privilégier le maximum entre voies pour se protéger des sur-températures.

Dans un mode de réalisation préférentielle, la fonction f est une moyenne et on a S=moy_AB=(A+B)/2. Cela signifie que la donnée de travail S correspond à la moyenne des valeurs des voies d'acquisition A et B.

La mémoire 24 stocke un modèle informatique Mod de la grandeur mesurée par les voies A, B. Ce modèle a été élaboré préalablement à partir d'autres mesures.

Comme indiqué précédemment, la précision des capteurs 12, 14 est meilleure que celle du modèle Mod.

L'unité de calcul 20 peut regrouper plusieurs sous-unités de calcul, notamment dans le cas où les tâches sont partagées entre différents calculateurs ou ordinateurs.

Les voies d'acquisition A, B acquièrent en continu (ou à intervalle régulier) des données relatives au dispositif 30. Ces données sont envoyées à l'unité de calcul 20 qui calcule notamment un écart Δ entre les valeurs mesurées des voies A, B. Cet écart Δ peut être en valeur absolue ou en relatif (positive ou négative). Pour illustrer certaines situations dans la présente description, on considérera que les valeurs acquises vérifient la définition de Δ suivante : B=A+Δ.

On définit un seuil de défaillance Th_Err à partir duquel on considère que l'écart Δ sur la mesure, consécutif à une panne, risque de provoquer un évènement redouté ou indésiré (LOTC par exemple). Cela signifie que si la donnée de travail S correspond à la voie d'acquisition défectueuse (ce que l'on souhaite éviter donc), il y a un risque de provoquer l'évènement indésiré.

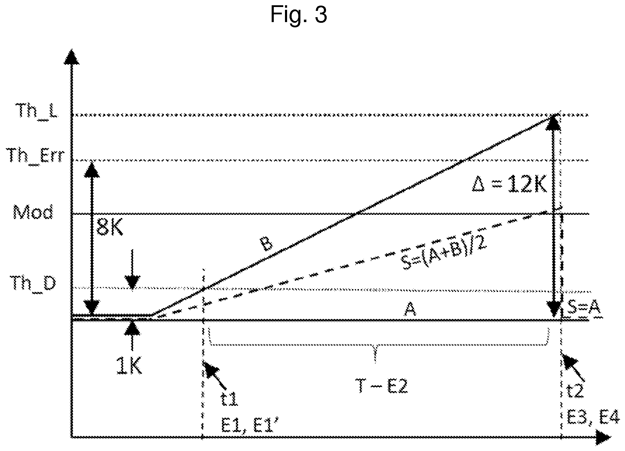

En référence à la **figure 3****,** qui illustre graphiquement les différentes étapes du procédé de détection et de localisation, ce procédé va être décrit. On suppose ici un seuil de défaillance de 8K.

Dans une première étape E1, une erreur, consécutive à une défaillance, est détectée lorsque l'écart Δ atteint un seuil de détection Th_D (1K sur la **figure 3**). L'erreur est symptomatique d'une voie d'acquisition défectueuse. La donnée relative au seuil de détection Th_D est typiquement stockée dans la mémoire 24. Le seuil de détection Th_D dépend du système d'acquisition 10 dont notamment les spécifications des capteurs 12, 14 (donc de leur précision).

L'étape E1 est mise en oeuvre par l'unité de calcul 20. Sur la **figure 3****,** l'étape E1 survient à t1.

Optionnellement, une étape de notification E1' est déclenchée par l'unité de calcul 20 pour fournir une information selon laquelle une erreur a été détectée. L'information de détection d'erreur peut être exploitée par un calculateur, un autre module de l'unité de calcul 20, ou encore par un opérateur humain, etc.). Par conséquent, il existe une information de détection d'erreur relative au système d'acquisition indiquant qu'une des deux voies A, B est défectueuse, mais sans pouvoir à ce stade identifier laquelle.

Ensuite, une étape d'attente E2 est effectuée, ce qui correspond simplement à une attente pour laisser le système évoluer pendant une durée T. Durant cette étape d'attente E2, la panne est connue mais sous contrôle, c'est-à-dire que l'on sait que l'erreur engendrée ne va pas conduire à l'évènement redouté : il s'agit donc d'une durée de maintien sous contrôle de l'erreur ou d'une durée d'inoffensivité de l'erreur. La durée T dure jusqu'à ce qu'une étape de localisation E3 de la voie défectueuse soit déclenchée (voir **figure 3**). La durée T est typiquement non nulle (sauf dans les cas de panne franche, où une voie se déplace instantanément).

L'étape de localisation E3 est effectuée lorsque l'écart Δ des valeurs mesurées entre les voies A, B atteint un seuil de localisation Th_L (**figure 3**). La localisation se fait en comparant les valeurs mesurées pour les voies A, B avec le modèle Mod des voies A, B stockés dans la mémoire 24. Typiquement, la voie A, B considérée comme non-défectueuse est celle qui est le proche du modèle Mod. Plus proche signifie que l'écart entre les valeurs est le plus faible.

L'étape E3 est mise en oeuvre par l'unité de calcul 20. Sur la **figure 3**, l'étape E3 survient à t2.

Grâce à l'attente E2, l'écart Δ a pu grandir depuis l'étape de détection E1 (par exemple dans le cas d'une dérive de gain du capteur), ce qui fait que l'identification de la voie se fait avec moins de risque d'erreur malgré l'imprécision du modèle Mod.

Naturellement, le seuil de localisation Th_L a une valeur différente de celle du seuil de détection Th_D, sinon les mêmes risques d'erreur liée à une localisation précoce seraient présents.

De plus, comme la détection E1 a été effectuée en amont, un nouvel état de panne détectée mais panne non localisée est créé. Il y ainsi une détection préventive qui peut provoquer la mise en place de certaines mesures préventives : non prise en compte des données générées par le système d'acquisition 10 ou opération de maintenance. En effet, même si le risque de se tromper de voies A, B est élevé à ce stade, la criticité en maintenance est largement moindre que lors d'opération. Il est donc raisonnable dans ce cadre-là d'essayer de localiser plus tôt l'erreur.

Une fois que la localisation E3 a été effectuée et que la voie défectueuse a été identifiée (ou concomitamment), une étape de sélection (aussi appelée accommodation) E4 de la voie non-défectueuse est mise en oeuvre. Cela signifie que la donnée de travail S de l'unité de calcul 20 devient la voie d'acquisition non défectueuse - l'autre voie étant ignorée.

L'étape de sélection E4 est mise en oeuvre par l'unité de calcul 20. Sur la **figure 3****,** l'étape E4 survient à t1 aussi.

Il y a donc deux seuils à régler : le seuil de détection Th_D et le seuil de localisation Th_L. Le seuil de détection Th_D dépend uniquement des spécifications capteurs.

En revanche, il reste à déterminer la valeur du seuil de localisation Th_L, ce qui impose de connaitre le moment à partir duquel on aboutirait à l'évènement redouté sans accommodation.

En pratique, comme cela a été indiqué plus tôt, la donnée de travail S correspond à la moyenne Moy_AB des voies d'acquisition A, B. Par définition, si on se trompe sur la mesure d'un écart Δ égal à Th_Err et que la donnée de travail S correspond à la voie défectueuse, on risque d'aboutir à l'évènement redouté.

Or, tant que l'on n'a pas localisé la voie d'acquisition défectueuse, la panne a un impact divisé par deux (car la donnée de travail S est la moyenne Moy_AB entre les deux voies A, B).

Par conséquent, le risque ne se produit que lorsque que S-A=Moy_AB-A=Th_ErrA. On a donc Th_Err-A =(A+B)/2-A=(A+A+Δ)/2-A= Δ/2, soit Δ=2Th_Err.

Il est donc possible de ne mettre en oeuvre l'étape E3 de localisation que lorsque l'écart Δ entre voies atteint 2Th_Err, c'est-à-dire le plus tardivement possible. Cette valeur étant extrémale, l'application d'une marge de sécurité fait que l'on cherche à localiser lorsque l'écart Δ entre voies atteint Th_L tel que Th_Err<Th_L≤2Th_Err.

En d'autres termes, comme Th_L>Th_Err (Th_L est strictement supérieur à Th_Err), l'écart Δ entre voies A, B sera amené à dépasser le seuil de défaillance Th_Err durant l'étape d'attente E2. En revanche, comme Th_L≤2Th_Err, la donnée de travail S=Moy_AB garde bien un écart avec la voie A (ou la voie B d'ailleurs, au signe près, car la fonction est la fonction moyenne) inférieur à Th_Err durant toute la phase d'attente E2, ce qui signifie que le risque que l'évènement redouté survienne est évité. Si Th_L=2Th_Err, l'étape de localisation est déclenchée à l'instant où la donnée de travail S=Moy_AB atteint un écart avec la voie A qui vaut Th_Err. Si Th_L<2Th_Err, alors la donnée de travail S=Moy_AB garde bien un écart avec la voie A qui sera toujours inférieur à Th_Err.

Comme d'autres données de sortie S sont possibles (utilisation d'autres fonctions f que la moyenne), le principe est immédiatement généralisable : on choisit un seuil de localisation Th_L de sorte que l'écart entre les valeurs des deux voies A, B puisse dépasser le seuil de défaillance Th_Err mais que l'écart entre la donnée de travail S et l'une ou l'autre des deux voies A, B (on peut calculer les deux écarts et prendre le maximum des écarts) ne puisse pas dépasser le seuil de défaillance Th_Err.

De cette manière, on localise « au plus tard » lorsque l'erreur sur la voie d'acquisition défaillante est maximale ce qui diminue fortement la probabilité de mauvaise localisation.

Les valeurs des seuils Th_Err, Th_L_, Th_D sont mémorisées dans la mémoire 24 de l'unité de calcul 20. Les seuils sont ici exprimés en valeur absolue, c'est-à-dire qu'ils sont positifs.

Comme précisé ci-dessus, les seuils et les écarts sont avantageusement exprimés en valeur absolue, afin de ne pas dépendre des signes des données acquises. Il est toutefois possible de travailler hors valeur absolue : il faut alors tenir compte des signes et des évolutions (croissante ou décroissante) des données.

Grâce au procédé décrit, on utilise au maximum les tolérances maximales sur l'acquisition avant l'étape de localisation E3 pour accommoder au juste besoin. Par conséquent, plus cette criticité sera maitrisée, plus la performance de gestion des pannes pourra être améliorée.

Enfin, il se peut que le fonctionnement du système d'acquisition 10 et/ou la précision du modèle Mod varie en fonction du régime de fonctionnement du dispositif 30. Dans ce cas, différentes valeurs de chaque seuil Th_Err, Th_L et/ou Th_D, et/ou le modèle Mod peuvent être stockés dans une table dans la mémoire 24, en fonction des plages de fonctionnement du système d'acquisition 10 et/ou de la précision du modèle.

## Revendications

1. Procédé de détection et de localisation de panne d'une voie d'acquisition de mesure dans un système d'acquisition (10) comprenant deux voies d'acquisition redondantes (A, B) de la mesure d'une grandeur physique dans un environnement, le procédé utilisant une unité de calcul (20) comprenant une mémoire (24) stockant un modèle (Mod) de la grandeur physique mesurée, ledit modèle fournissant des valeurs modélisées de la grandeur physique en fonction de mesures d'autres grandeurs physiques dans ledit environnement, le procédé mettant en oeuvre les étapes suivantes :
- (E1) détection d'une erreur symptomatique d'une voie d'acquisition défectueuse lorsqu'un écart (Δ) entre les valeurs mesurées des deux voies (A, B) atteint un seuil de détection (Th_D),
- (E2) attente pour laisser le système d'acquisition évoluer pendant une certaine durée (T) de maintien sous contrôle de l'erreur,
- (E3) localisation de la voie défectueuse parmi les deux voies (A, B), lorsque l'écart (Δ) des valeurs mesurées entre les voies (A, B) atteint un seuil de localisation (Th_L), ladite localisation étant effectuée à partir de la comparaison de la valeur mesurée de chacune des voies (A, B) avec une valeur modélisée de la grandeur physique,
le seuil de localisation (Th_L) étant différent du seuil de détection (Th_D).

2. Procédé selon la revendication 1, dans lequel l'unité de calcul (12) génère une donnée de travail (S, moy_AB) qui prend en compte les valeurs des deux voies d'acquisition (A, B) tant que l'étape de localisation (E3) n'est pas déclenchée, ledit procédé comprenant une étape de :
- (E4) sélection de la voie non-défectueuse (B, A) comme grandeur de travail (S) une fois l'étape de localisation (E3) de la voie défectueuse (A, B) effectuée.

3. Procédé selon l'une quelconque des revendications 1 à 2, dans lequel un seuil de défaillance (Th_Err) est prédéfini et l'unité de calcul (12) génère une donnée de travail (S, moy_AB) qui prend en compte les valeurs des deux voies d'acquisition (A, B) tant que l'étape de localisation (E3) n'est pas déclenchée, et dans lequel le seuil de localisation (Th_L) est choisi de sorte que l'écart (Δ) entre les valeurs des deux voies (A, B) puisse dépasser le seuil de défaillance (Th_Err) mais que l'écart entre la donnée de travail (Moy_AB) et la valeur de l'une ou l'autre des deux voies (A, B) ne puisse pas dépasser le seuil de défaillance (Th_Err).

4. Procédé selon la revendication 3, dans lequel le seuil de localisation (Th_L) est supérieur à un seuil de défaillance (Thr_Err).

5. Procédé selon l'une quelconque des revendications 1 à 4, dans lequel la grandeur de travail (moy_AB) correspond à une moyenne arithmétique des grandeurs des voies (A, B).

6. Procédé selon la revendication 5, dans lequel le seuil de localisation (Th_L) est compris entre le seuil de défaillance (Th_Err) et deux fois le seuil de défaillance (Th_Err).

7. Procédé selon l'une quelconque des revendications 1 à 6, dans lequel une étape de notification (E1') de la détection est émise par l'unité de calcul (10) avant la mise en oeuvre de l'étape de localisation (E4), préférablement au moment de l'étape de détection (E3), pour fournir une information d'un état de panne détectée mais non localisée.

8. Procédé selon l'une quelconque des revendications 1 à 7, dans lequel le seuil de détection (Th_D) et/ou le seuil de localisation (Th_L) et/ou le seuil de défaillance (Th_Err) et/ou le modèle de la grandeur physique (Mod) est/sont fonction des plages de fonctionnement du système d'acquisition (10) et/ou de la précision du modèle.

9. Procédé selon l'une quelconque des revendications 1 à 8, dans lequel le seuil de détection (Th_D) est fixé en fonction des spécifications de capteur des deux voies (A, B).

10. Unité de calcul (12) pour la détection et la localisation de panne d'une voie d'acquisition de mesure dans un système d'acquisition (10) comprenant deux voies d'acquisition redondantes (A, B) de la mesure d'une grandeur physique dans un environnement, l'unité de calcul comprenant une mémoire (24) stockant un modèle (Mod) de la grandeur physique mesurée, ledit modèle fournissant des valeurs modélisées de la grandeur physique en fonction de mesures d'autres grandeurs physiques dans ledit environnement, l'unité de calcul étant configuré pour recevoir des données de mesure issues des voies d'acquisition (A, B) du système d'acquisition (10),
l'unité de calcul (12) étant configurée pour mettre en oeuvre les étapes suivantes :
- (E1) détection d'une erreur d'une erreur symptomatique d'une voie d'acquisition défectueuse lorsque l'écart entre les valeurs mesurées des deux voies (A, B) franchit un seuil de détection (Th_D),
- (E2) attente pour laisser le système d'acquisition évoluer pendant une certaine durée (T) de maintien sous contrôle de l'erreur,
- (E3) localisation de la voie défectueuse parmi les deux voies (A, B), lorsque l'écart des valeurs mesurées entre les voies (A, B) franchit un seuil de localisation (Th_L), ladite localisation étant effectuée à partir de la comparaison de la valeur mesurée de chacune des voies (A, B) avec une valeur modélisé de la grandeur physique,
le seuil de localisation (Th_L) étant différent du seuil de détection (Th_D).

## Patentansprüche

1. Verfahren zur Detektion und zur Lokalisierung eines Fehlers eines Messerfassungswegs in einem Erfassungssystem (10), das zwei redundante Erfassungswege (A, B) für die Messung einer physikalischen Größe in einer Umgebung umfasst, wobei das Verfahren eine Recheneinheit (20) verwendet, die einen Speicher (24) umfasst, der ein Modell (Mod) der gemessenen physikalischen Größe speichert, wobei das Modell modellierte Werte der physikalischen Größe in Abhängigkeit von Messungen anderer physikalischer Größen in der Umgebung bereitstellt, wobei das Verfahren die folgenden Schritte durchführt:
- (E1) Detektion eines symptomatischen Fehlers eines defekten Erfassungswegs, wenn eine Abweichung (Δ) zwischen den gemessenen Werten der zwei Wege (A, B) einen Detektionsgrenzwert (Th_D) erreicht,
- (E2) Warten, damit sich das Erfassungssystem während einer bestimmten Haltedauer (T) unter Kontrolle des Fehlers entwickelt,
- (E3) Lokalisieren des defekten Wegs von den zwei Wegen (A, B), wenn die Abweichung (Δ) der gemessenen Werte zwischen den Wegen (A, B) einen Lokalisierungsgrenzwert (Th_L) erreicht, wobei die Lokalisierung ausgehend vom Vergleich des gemessenen Werts jedes Wegs (A, B) mit einem modellierten Wert der physikalischen Größe durchgeführt wird,
wobei sich der Lokalisierungsgrenzwert (Th_L) vom Detektionsgrenzwert (Th_D) unterscheidet.

2. Verfahren nach Anspruch 1, wobei die Recheneinheit (12) einen Arbeitsdatenwert (S, moy_AB) erzeugt, der die Werte der zwei Erfassungswege (A, B) berücksichtigt, solange der Lokalisierungsschritt (E3) nicht ausgelöst ist, wobei das Verfahren einen folgenden Schritt umfasst:
- (E4) Auswählen des nicht defekten Wegs (B, A) als Arbeitsgröße (S), sobald der Lokalisierungsschritt (E3) des defekten Wegs (A, B) durchgeführt wurde.

3. Verfahren nach einem der Ansprüche 1 bis 2, wobei ein Ausfallgrenzwert (Th_Err) vorbestimmt ist und die Recheneinheit (12) einen Arbeitsdatenwert (S, moy_AB) erzeugt, der die Werte der zwei Erfassungswege (A, B) berücksichtigt, solange der Lokalisierungsschritt (E3) nicht ausgelöst ist, und wobei der Lokalisierungsgrenzwert (Th_L) derart gewählt ist, dass die Abweichung (Δ) zwischen den Werten der zwei Wege (A, B) den Ausfallgrenzwert (Th_Err) überschreiten kann, aber die Abweichung zwischen dem Arbeitsdatenwert (Moy_AB) und dem Wert von dem einen oder dem anderen der zwei Wege (A, B) den Ausfallgrenzwert (Th_Err) nicht überschreiten kann.

4. Verfahren nach Anspruch 3, wobei der Lokalisierungsgrenzwert (Th_L) größer als ein Ausfallgrenzwert (Thr_Err) ist.

5. Verfahren nach einem der Ansprüche 1 bis 4, wobei die Arbeitsgröße (moy_AB) einem arithmetischen Mittel der Größen der Wege (A, B) entspricht.

6. Verfahren nach Anspruch 5, wobei der Lokalisierungsgrenzwert (Th_L) zwischen dem Ausfallgrenzwert (Th Err) und zweimal dem Ausfallgrenzwert (Th_Err) liegt.

7. Verfahren nach einem der Ansprüche 1 bis 6, wobei ein Benachrichtigungsschritt (E1') der Detektion von der Recheneinheit (10) vor der Durchführung des Lokalisierungsschritts (E4) vorzugsweise im Moment des Detektionsschritts (E3) erfolgt, um eine Information über einen Zustand eines ermittelten, aber nicht lokalisierten Fehlers bereitzustellen.

8. Verfahren nach einem der Ansprüche 1 bis 7, wobei der Detektionsgrenzwert (Th_D) und/oder der Lokalisierungsgrenzwert (Th_L) und/oder der Ausfallgrenzwert (Th_Err) und/oder das Modell der physikalischen Größe (Mod) von den Betriebsbereichen des Erfassungssystems (10) und/oder von der Genauigkeit des Modells abhängt/abhängen.

9. Verfahren nach einem der Ansprüche 1 bis 8, wobei der Detektionsgrenzwert (Th_D) in Abhängigkeit von den Sensorspezifikationen der zwei Wege (A, B) festgelegt ist.

10. Recheneinheit (12) zur Detektion und zur Lokalisierung eines Fehlers eines Messerfassungswegs in einem Erfassungssystem (10), das zwei redundante Erfassungswege (A, B) für die Messung einer physikalischen Größe in einer Umgebung umfasst, wobei die Recheneinheit einen Speicher (24) umfasst, der ein Modell (Mod) der gemessenen physikalischen Größe speichert, wobei das Modell modellierte Werte der physikalischen Größe in Abhängigkeit von Messungen anderer physikalischer Größen in der Umgebung bereitstellt, wobei die Recheneinheit ausgelegt ist, um Messdaten von den Erfassungswegen (A, B) des Erfassungssystems (10) zu empfangen,
wobei die Recheneinheit (12) ausgelegt ist, um die folgenden Schritte durchzuführen:
- (E1) Detektion eines symptomatischen Fehlers eines defekten Erfassungswegs, wenn die Abweichung zwischen den gemessenen Werten der zwei Wege (A, B) einen Detektionsgrenzwert (Th_D) überschreitet,
- (E2) Warten, damit sich das Erfassungssystem während einer bestimmten Haltedauer (T) unter Kontrolle des Fehlers entwickelt,
- (E3) Lokalisieren des defekten Wegs von den zwei Wegen (A, B), wenn die Abweichung der gemessenen Werte zwischen den Wegen (A, B) einen Lokalisierungsgrenzwert (Th_L) überschreitet, wobei die Lokalisierung ausgehend vom Vergleich des gemessenen Werts jedes Wegs (A, B) mit einem modellierten Wert der physikalischen Größe durchgeführt wird,
wobei sich der Lokalisierungsgrenzwert (Th_L) vom Detektionsgrenzwert (Th_D) unterscheidet.

## Claims

1. Method for detecting and locating the failure of a measurement acquisition channel in an acquisition system (10) comprising two acquisition channels redundant (A, B) measurement of a physical quantity in an environment, the method using a calculation unit (20) comprising a memory (24) storing a model (Mod) of the measured physical quantity, said model providing modeled values of the physical quantity as a function of measurements of other physical quantities in said environment, the method implementing the next steps :
- (E1) detection of a symptomatic error of a faulty acquisition channel when a deviation (A) between the measured values of the two channels (A, B) reaches a detection threshold (Th_D),
- (E2) wait to let the acquisition system evolve for a certain time duration (T) of maintenance under control of the error,
- (E3) locating the defective channel among the two channels (A, B), when the difference (A) in the measured values between the channels (A, B) reaches a location threshold (Th_L), said location being performed on the basis of the comparison of the measured value of each of the channels (A, B) with a modeled value of the defective channel (A, B) physical quantity,
the localization threshold (Th_L) being different from the detection threshold (Th_D).

2. Method according to claim 1, in which the calculation unit (12) generates a work data (S, mean AB) which takes into account the values of the two channels acquisition step (A, B) as long as the location step (E3) is not triggered, said method comprising a step of :
- (E4) selection of the non-defective channel (B, A) as the working size (S) after the step of locating (E3) the defective channel (A, B).

3. Method according to any one of claims 1 to 2, wherein a failure threshold (Th_Err) is predefined and the computing unit (12) generates a working data (S, moy AB) which takes into account the values of the two acquisition channels (A, B) as long as the localization step (E3) is not triggered, and wherein the localization threshold (Th_L) is chosen such that the deviation (A) between the values of the two channels (A, B) may exceed the failure threshold (Th_Err) but that the deviation between the working data (Moy AB) and the value of one or other of the two channels (A, B) cannot exceed the failure threshold (Th_Err).

4. The method of claim 3, wherein the location threshold (Th_L) is above a failure threshold (Thr Err).

5. The method according to any one of claims 1 to 4, wherein the
The working size (avg AB) corresponds to the arithmetic mean of the sizes of the channels (A, B).

6. The method of claim 5, wherein the location threshold (Th_L) is between the failure threshold (Th_Err) and twice the failure threshold (Th_Err).

7. The method of any one of claims 1 to 6, wherein a
the notification step (E1') of the detection is issued by the computing unit (10) before the implementation of the locating step (E4), preferably at the time of the detection step (E3), to provide information of a detected failure state but not localized.

8. Method according to any one of claims 1 to 7, in which the detection threshold (Th_D) and/or the localization threshold (Th_L) and/or the failure threshold (Th_Err) and/or the model of the physical quantity (Mod) is/are a function of the operating ranges of the acquisition system (10) and/or the accuracy of the model.

9. The method of any one of claims 1 to 8, wherein the threshold (Th_D) is set according to the sensor specifications of both channels (A, B).

10. Computing unit (12) for detecting and reading the fault location of a track of measurement acquisition in an acquisition system (10) comprising two redundant acquisition channels (A, B) of the measurement of a physical quantity in an environment, the calculation unit comprising a memory (24) storing a model (Mod) of the measured physical quantity, said model providing values of the physical quantity as a function of measurements of other physical quantities in said environment, the calculation unit being configured to receive measurement data from the acquisition channels (A, B) of the acquisition system (10), the calculation unit (12) being configured to implement the following steps:
- (E1) detection of an error symptomatic of a defective acquisition channel when the difference between the measured values of the two channels (A, B) crosses a detection threshold (Th_D),
- (E2) wait to let the acquisition system evolve for a certain time duration (T) of maintenance under control of the error,
- (E3) localization of the defective channel among the two channels (A, B), when the difference in the measured values between the channels (A, B) exceeds a localization threshold (Th_L), the said localization being carried out on the basis of the comparison of the measured value of each of the channels (A, B) with a modeled value of the quantity physical,
the localization threshold (Th_L) being different from the detection threshold (Th_D).
